(19) **Europäisches Patentamt / European Patent Office / Office européen des brevets**

(11) **EP 2 939 739 B1**

(12) **EUROPEAN PATENT SPECIFICATION**

(45) Date of publication and mention
of the grant of the patent:
**20.12.2023 Bulletin 2023/51**

(21) Application number: **12891018.9**

(22) Date of filing: **28.12.2012**

(51) International Patent Classification (IPC):
**B01J 23/88** [(2006.01)]     **B01J 27/19** [(2006.01)]
**C10K 1/08** [(2006.01)]     **C10K 3/04** [(2006.01)]

(52) Cooperative Patent Classification (CPC):
**C10K 3/04; B01J 23/6525; B01J 23/8872;**
**B01J 23/8906; B01J 23/894; B01J 23/8946;**
**B01J 27/1856; B01J 27/19; B01J 35/023;**
**B01J 37/0063; B01J 37/0242; B01J 37/0244;**
**C10K 1/004; C10K 1/005; C10K 1/024;**     (Cont.)

(86) International application number:
**PCT/JP2012/084230**

(87) International publication number:
**WO 2014/103074 (03.07.2014 Gazette 2014/27)**

(54) **CO SHIFT CATALYST**

CO-SHIFTKATALYSATOR

CATALYSEUR DE CONVERSION DE CO

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**04.11.2015 Bulletin 2015/45**

(73) Proprietor: **Mitsubishi Heavy Industries, Ltd.**
**Chiyoda-ku**
**Tokyo 100-8332 (JP)**

(72) Inventors:
• **YONEMURA, Masanao**
**Tokyo 108-8215 (JP)**
• **YASUTAKE, Toshinobu**
**Tokyo 108-8215 (JP)**
• **SAWATA, Akihiro**
**Tokyo 108-8215 (JP)**
• **SEIKI, Yoshio**
**Tokyo 108-8215 (JP)**
• **TANAKA, Yukio**
**Tokyo 108-8215 (JP)**
• **HIGASHINO, Koji**
**Tokyo 108-8215 (JP)**
• **ABE, Hyota**
**Tokyo 108-8215 (JP)**

• **YOSHIDA, Kaori**
**Tokyo 108-8215 (JP)**

(74) Representative: **Henkel & Partner mbB**
**Patentanwaltskanzlei, Rechtsanwaltskanzlei**
**Maximiliansplatz 21**
**80333 München (DE)**

(56) References cited:
**WO-A1-2011/105501     WO-A1-2012/168690**
**CA-A1- 1 151 135     CN-A- 1 096 494**
**JP-A- H08 173 809     JP-A- S58 214 342**
**JP-A- 2008 104 906     JP-B1- S 508 038**
**US-A- 4 153 671     US-A1- 2012 294 789**

• **NEWSOME, D. S.: 'The water-gas shift reaction'**
**CATAL. REV. SCI. ENG. vol. 21, no. 2, 16**
**September 1980, pages 275 - 318, XP008176054**
• **KOJI TSUCHIMOTO ET AL.: 'Ryuka Suiso**
**Sonzaika deno Issankatanso to Suijoki no Hanno**
**ni Okeru MoO3·MgO-kei Shokubai no Kassei' THE**
**JOURNAL OF CHEMICAL INDUSTRY vol. 71, no.**
**9, 1968, pages 1488 - 1492, XP055184990**

(52) Cooperative Patent Classification (CPC): (Cont.)
     **C10K 1/08;** B01D 53/1462; Y02P 20/151

**Description**

Field

The present invention relates to a CO shift catalyst that converts CO in a gasification gas into $CO_2$. Background
Effective use of coal has been attracted as one of important countermeasures for recent energy problems.
On the other hand, to convert coal into an energy medium with a high value-added, an advanced technology such as a coal gasification technology and a gas purifying technology is necessary.
An integrated coal gasification combined cycle (IGCC) system, which generates power using the gasification gas, is suggested (Patent Literature 1).
The integrated coal gasification combined cycle (IGCC) represents a system in which coal is converted into a combustible gas in a high-temperature and high-pressure gasification furnace, and combined cycle power generation is performed by a gas turbine and a steam turbine by using the gasification gas as a fuel.
For example, the majority of hydrocarbon compounds that exist in the coal gasification gas (generated gas) is carbon monoxide (CO), and carbon dioxide ($CO_2$) and hydrocarbon ($CH_4$, CnHm) occupy only several percentage of the hydrocarbon compound. As a result, it is necessary to convert CO that exists in the generated gas into $CO_2$ so as to recover $CO_2$, and conversion into $CO_2$ through the following reaction by using a shift catalyst while adding water vapor ($H_2O$) is suggested (Patent Literature 2).

$$CO + H_2O \Leftrightarrow CO_2 + H_2 + 40.9 \text{ kJ/mol (exothermic reaction)} \qquad (1)$$

From a finding about a shift reaction in a chemical industry field until now, when an water vapor addition ratio ($H_2O/CO$) at an inlet of a CO shift reactor is sufficiently increased to allow the reaction of (1) to progress, a desired conversion ratio of CO $\rightarrow$ $CO_2$ is obtained.
Patent Literature 3 discloses a CO shift catalyst that produces reduced levels of methanation and is useful in low-steam:CO water gas shift processes. The CO shift catalyst comprises a titania carrier, 5 to 30% by weight of an active component selected from tungsten oxide or molybdenum oxide, 1 to 10% by weight of a promoter metal oxide selected from cobalt oxide and nickel oxide, and 1 to 15% by weight of an oxide of an alkali metal selected from sodium, potassium and caesium.

Citation List

Patent Literature

Patent Literature 1: Japanese Laid-open Patent Publication No. 2004-331701
Patent Literature 2: Japanese Laid-open Patent Publication No. 2011-157486
Patent Literature 3: International Patent Application Publication No. WO 2012/168690 A1

Summary

Technical Problem

For example, a Co-Mo/$Al_2O_3$-based catalyst has been typically used as a CO shift catalyst. However, this catalyst exhibits activity at a high-temperature region (for example, 350°C or higher), and thus there is a concern of precipitation of C.
Therefore, it is necessary to add an excessive amount of water vapor (water vapor ($H_2O$)/CO $\geq$ 3) as a countermeasure against the precipitation of C.
On the other hand, an IGCC plant provided with a $CO_2$ recovering facility is a power generation plant, and it is necessary to consider an environment (reduction in $CO_2$ emission), and it is also necessary to put emphasis on power generation efficiency of the plant.
That is, as a water vapor addition source for realizing water vapor addition ratio ($H_2O/CO$) while being supplied to the shift reactor, for example, pressurized steam in extracted air from a heat recovery steam generator (HRSG) is used. However, reduction in an amount of water vapor that is extracted is an important factor for an improvement in plant efficiency, and thus it is demanded to reduce the amount of water vapor that is extracted from the heat recovery steam generator (HRSG) as can as possible from the viewpoint of an increase in power generation efficiency.
Therefore, it is desired earnestly to provide a CO shift catalyst in which an improvement in durability against the precipitation of C is realized, and CO shift conversion is stably possible for a long period of time even in a case where a supply amount of water vapor greatly decreases approximately from water vapor ($H_2O$)/CO = 3 to water vapor ($H_2O$)/CO = 1.

The invention has been made in consideration of the above-described problem, and an object thereof is to provide a CO shift catalyst in which catalyst deterioration is not great even when an amount of water vapor is small and CO shift reaction can be carried in a stable and efficient manner, a CO shift reactor, and a method for purifying a gasification gas. The invention is defined by the claims.

Solution to Problem

In order to solve the above-mentioned problems, there is provided a CO shift catalyst that reforms carbon monoxide (CO) in a gasification gas, including: an active component including either molybdenum (Mo) or iron (Fe) as a main component, and either nickel (Ni) or ruthenium (Ru) as an accessory component; a promoter component including phosphorus (P); and a carrier which carries the active component and the promoter component, and includes one or more kinds of oxides of titanium (Ti), zirconium (Zr), and cerium (Ce).

Advantageous Effects of Invention

In the CO shift catalyst according to the invention, a promoter is added, and thus an initial amount of acid becomes small. Accordingly, even in a small amount of water vapor, it is possible to attain an effect in which a decrease in a CO conversion ratio after a durability test is small, and a CO shift reaction can be maintained in a satisfactory manner.

Brief Description of Drawings

FIG. 1 is a schematic diagram of a gasification gas purifying system provided with a CO shift reactor filled with a CO shift catalyst according to this example.
FIG. 2 is a graph comparing an initial CO conversion ratio (%) and a CO conversion ratio (%) after passage of 100 hours in a durability test with Test Catalyst 2.
FIG. 3 is a diagram illustrating an example of a coal gasification power generation plant.

Description of Embodiments

Hereinafter, the invention will be described in detail with reference to the attached drawings. In addition, the invention is not limited to the following example. In addition, constituent elements in the following example include constituent elements which can be easily assumed by a person having ordinary skill in the art, and substantially the same constituent elements which are in a so-called equivalent range. Furthermore, constituent elements disclosed in the following example may be appropriately combined.

Examples

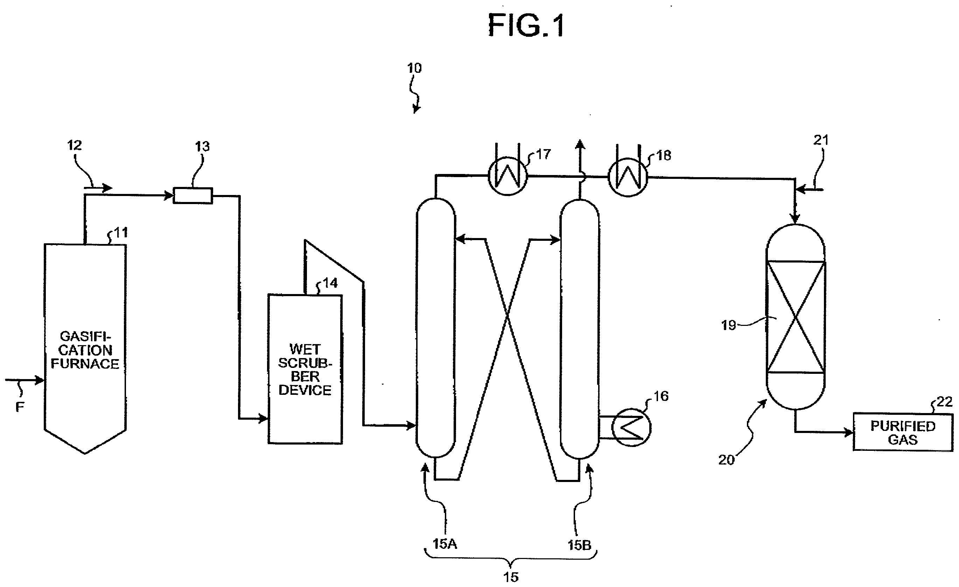

A CO shift catalyst according to an example of the invention, and a CO shift reactor using the CO shift catalyst will be described with reference to the attached drawings. FIG. 1 is a schematic diagram of a gasification gas purifying system provided with the CO shift reactor filled with the CO shift catalyst.

As illustrated in FIG. 1, a gasification gas purifying system 10 includes a gasification furnace 11 that gasifies coal that is a fuel F, a filter 13 that removes dust in a gasification gas 12 that is a generated gas, a wet scrubber device 14 that removes halogen in the gasification gas 12 after passing through the filter 13, a gas purifying device 15 which includes an absorber 15A that absorbs and removes $CO_2$ and $H_2S$ in the gasification gas 12 after heat exchange and a regenerator 15B that regenerates $CO_2$ and $H_2S$, and which is provided with a regeneration superheater 16 on a regenerator 15B side, first and second heat exchangers 17 and 18 which raise a temperature of the gasification gas 12, and a CO shift reactor 20 provided with a CO shift catalyst 19 which converts CO in the gasification gas 12 heated to a temperature, for example, of 300°C into $CO_2$ to obtain a purified gas 22. In addition, a reference numeral 21 in FIG. 1 represents water vapor.

In the gasification furnace 11, coal that is the fuel F is brought into contact with a gasification agent such as air and oxygen, and is combusted and gasified, whereby the gasification gas 12 is generated. The gasification gas 12 that is generated in the gasification furnace 11 contains carbon monoxide (CO), hydrogen ($H_2$), and carbon dioxide ($CO_2$) as a main component. However, the gasification gas 12 also contains elements (for example, a halogen component and a heavy metal such as mercury (Hg)) contained in coal in a slight amount, non-combusted compounds (for example, polycyclic aromatic compounds such as phenol and anthracene, cyan, ammonia, and the like) during coal gasification, and the like in a slight amount.

The gasification gas 12 generated in the gasification furnace 11 is introduced into the filter 13 from the gasification furnace 11. Dust in the gasification gas 12 that is introduced into the filter 13 is removed from the gasification gas 12. In addition, in addition to the filter 13, a cyclone, an electrostatic precipitator (EP), and the like may be used.

After removal of dust with the filter 13, the gasification gas 12 is subjected to gas purification with the gas purifying device 15, and then a temperature of the gasification gas 12 is risen with the first and second heat exchangers 17 and 18.

Subsequently, the water vapor 21 is supplied by a water vapor supply device (water vapor supply means), and then the gasification gas 12 is introduced to the CO shift reactor 20 provided with the CO shift catalyst 19. Carbon monoxide (CO) in the gasification gas 12 is reformed with the CO shift reactor 20 to convert CO into carbon dioxide ($CO_2$) under presence of the CO shift catalyst 19.

The CO shift catalyst 19 according to the invention is a CO shift catalyst that reforms carbon monoxide (CO) in a gas. The CO shift catalyst includes an active component including either molybdenum (Mo) or iron (Fe) as a main component, and either nickel (Ni) or ruthenium (Ru) as an accessory component, a promoter component including phosphorus (P), and a carrier which carries the active component and the promoter component, and includes one or more kinds of oxides of titanium (Ti), zirconium (Zr), and cerium (Ce).

It is preferable that the carrier be oxides of $TiO_2$, $ZrO_2$, and $CeO_2$.

In addition, the carrier may be a composite oxide (for example, $TiO_2$-$SiO_2$, $TiO_2$-$ZrO_2$, $TiO_2$-$Al_2O_3$, $ZrO_2$-$Al_2O_3$, $TiO_2$-$CeO_2$, $TiO_2$-$La_2O_3$, and the like) .

In the invention, a promoter component, which is a third component including alkali metals, is added to suppress activity of an acid site on a catalyst which allows precipitation of a carbonaceous substance to progress. Accordingly, even in a small amount of water vapor, precipitation of carbon is suppressed, and thus a decrease degree of activity is reduced.

As a result, in a case of using the CO shift catalyst of the invention, even when an amount of water vapor is reduced (for example, a great decrease approximately from water vapor ($H_2O$)/CO = 3 to water vapor ($H_2O$)/CO = 1), activity of the acid site is suppressed by neutralization and the like. Accordingly, precipitation of carbon (C) is suppressed, and thus an active component is not covered with carbon. As a result, even when a CO shift reaction is allowed to progress with a small amount of water vapor for a long period of time, the precipitation of carbon is suppressed, and thus CO shift reaction efficiency does not greatly decrease, and it is possible to allow satisfactory CO shift reaction to progress.

Here, a carried amount of molybdenum (Mo) or iron (Fe), which is a main component (first component), is preferably set to 0.1 wt% to 25 wt%, and more preferably 7 wt% to 20 wt%, and a carried amount of nickel (Ni) or ruthenium (Ru), which is an accessory component (second component), is preferably set to 0.01 wt% to 10 wt%, and more preferably 2 wt% to 10 wt%.

According to the invention, the promoter (third component) includes phosphorus (P).

In the invention, phosphorous (P) is added to reduce the initial acid site (refer to Test Examples to be described later).

As a result, an initial CO conversion ratio slightly decreases in comparison to a catalyst in the related art in which the promoter is not added. However, for example, a CO conversion ratio after a durability test for 100 hours becomes higher than that of the catalyst in the related art. The reason is assumed to be because an initial amount of acid in a catalyst decreases due to addition of the promoter (third component), and thus a precipitated amount of carbon (C) can be reduced.

As described above, according to the CO shift catalyst according to the invention, when converting CO in the gasification gas 12 gasified in the gasification furnace 11 into $CO_2$, even in a case where a great decrease occurs approximately from water vapor ($H_2O$)/CO = 3 to water vapor ($H_2O$)/CO = 1, precipitation of carbon is suppressed, and thus CO shift conversion is stably possible for a long period of time. In addition, an amount of water vapor that is supplied is reduced, and thus it is possible to provide a gas purifying process with high efficiency.

[Test Examples]

Hereinafter, test examples illustrating the effect of the invention will be described.

1) Manufacturing Method of Test Catalyst 1 (not according to the invention)

100 g of titanium oxide ($TiO_2$ (trade name: MC-90), manufactured by ISHIHARA SANGYO KAISHA, LTD.) was put into a porcelain dish, and nickel nitrate hexahydrate (NN) and ammonium molybdate tetrahydrate (MA), which were dissolved in 150 ml of water, were added to the titanium oxide in such a manner that 14 wt% of $MoO_3$ as a main active component (first component) was carried, 4 wt% of NiO as an accessory active component (second component) was carried, and 0.5 wt% of Ca as a promoter (third component) was carried on the basis of the total amount of powders which were finally obtained, and then the resultant mixture was subjected to evaporation to dryness and impregnation on the porcelain dish. In addition, powders that were obtained were completely dried with a dryer, and were fired at 500°C for three hours (a temperature rising rate of 100°C/h), thereby obtaining a powder catalyst.

The powder catalyst that was obtained was fixed with a compression molding machine set to 30 tons, and was pulverized to have a particle size in a predetermined particle size range (for example, 2 mm to 4 mm). Then, the pulverized powder was sieved to obtain Test Catalyst 1.

2) Manufacturing Method of Test Catalyst 2 (not according to the invention)

Test Catalyst 2 was obtained in the same operation as in the manufacturing of Test Catalyst 1 except that potassium (K) was carried instead of Ca as the promoter (third component).

3) Manufacturing Method of Test Catalyst 3 (not according to the invention)

Test Catalyst 3 was obtained in the same operation as in the manufacturing of Test Catalyst 1 except that sodium (Na) was carried instead of Ca as the promoter (third component).

4) Manufacturing Method of Test Catalyst 4

Test Catalyst 4 was obtained in the same operation as in the manufacturing of Test Catalyst 1 except that phosphorus (P) was carried instead of Ca as the promoter (third component).

5) Manufacturing Method of Test Catalyst 5

Test Catalyst 5 was obtained in the same operation as in the manufacturing of Test Catalyst 4 except that a carried amount of phosphorus (P) as the promoter (third component) was changed to 0.1 wt%.

6) Manufacturing Method of Test Catalyst 6

Test Catalyst 6 was obtained in the same operation as in the manufacturing of Test Catalyst 4 except that the carried amount of phosphorus (P) as the promoter (third component) was changed to 0.3 wt%.

7) Manufacturing Method of Test Catalyst 7

Test Catalyst 7 was obtained in the same operation as in the manufacturing of Test Catalyst 4 except that the carried amount of phosphorus (P) as the promoter (third component) was changed to 1.0 wt%.

8) Manufacturing Method of Test Catalyst 8

Test Catalyst 8 was obtained in the same operation as in the manufacturing of Test Catalyst 4 except that the carried amount of phosphorus (P) as the promoter (third component) was changed to 2.0 wt%.

9) Manufacturing Method of Comparative Catalyst

Comparative Catalyst was obtained in the same operation as in the manufacturing of Test Catalyst 1 except that the promoter (third component) was not added.

Evaluation of the catalysts was performed as described below.

An evaluation test was performed as follows. 3.3 cc of catalyst was filled in a reaction tube with a tubular shape having an inner diameter of 14 mm, and then catalytic activity was evaluated with a flow type microreactor device.

In comparison of initial catalytic activity, a CO conversion ratio, which is a variation between gas flow rates on an inlet side and an outlet side of a catalyst layer, was obtained.

Evaluation conditions about initial activity and activity after endurance were set as follows.

A gas composition was set to $H_2/CO/CO_2$ = 30/50/20 in terms of mol%, $H_2S$ was set to 700 ppm, S/CO was set to 1.0, and a test was performed under conditions of 0.9 MPa, a temperature of 250°C, and SV = 6,000 $h^{-1}$.

A CO conversion ratio was obtained by the following Expression (I).

$$CO \text{ conversion ratio } (\%) = (1-(\text{flow velocity (mol/hour)}$$
$$\text{of a CO gas on an outlet side of a catalyst layer)/(flow}$$
$$\text{velocity (mol/hour) of the CO gas on an inlet side of the}$$
$$\text{catalyst layer)}) \times 100 \ldots (I)$$

In addition, a durability (acceleration) test was performed under the following conditions.

A gas composition was set to $H_2/CO/CO_2$ = 30/50/20 in terms of mol%, $H_2S$ was set to 700 ppm, S/CO was set to 0.1, and a test was performed under conditions of 0.9 MPa, a temperature of 450°C, and SV = 2,000 $h^{-1}$.

Composition lists of the catalyst and test results are shown in Table 1.

Table 1

| | Active components | | | | Carrier | Promoter component (third component) | | Initial CO conversion ratio (%) | CO conversion ratio (%) after endurance | Precipitated amount of C (wt%) | Initial amount of acid (mmol/g) | Deterioration ratio (%) |
|---|---|---|---|---|---|---|---|---|---|---|---|---|
| | Metal | Carried amount (wt%) | Metal | Carried amount (wt%) | | Component | Carried amount (wt%) | | | | | |
| Test Catalyst 1* | Mo | 14 | Ni | 4 | TiO$_2$ | Ca | 0.5 | 69.5 | 62.9 | 0.98 | 0.14 | 91 |
| Test Catalyst 2* | ↑ | ↑ | ↑ | ↑ | TiO$_2$ | K | 0.5 | 69.3 | 64.8 | 0.87 | 0.11 | 94 |
| Test Catalyst 3* | ↑ | ↑ | ↑ | ↑ | TiO$_2$ | Na | 0.5 | 70.5 | 63.2 | 0.92 | 0.13 | 90 |
| Test Catalyst 4 | ↑ | ↑ | ↑ | ↑ | TiO$_2$ | P | 0.5 | 70.4 | 67.8 | 0.82 | 0.13 | 96 |
| Test Catalyst 5 | ↑ | ↑ | ↑ | ↑ | TiO$_2$ | P | 0.1 | 69.1 | 66.2 | 0.83 | 0.11 | 96 |
| Test Catalyst 6 | ↑ | ↑ | ↑ | ↑ | TiO$_2$ | P | 0.3 | 68.9 | 65.3 | 0.80 | 0.14 | 95 |
| Test Catalyst 7 | ↑ | ↑ | ↑ | ↑ | TiO$_2$ | P | 1.0 | 68.8 | 63.8 | 0.85 | 0.13 | 93 |
| Test Catalyst 8 | ↑ | ↑ | ↑ | ↑ | TiO$_2$ | P | 2.0 | 69.5 | 63.2 | 0.88 | 0.12 | 91 |
| Comparative Catalyst | ↑ | ↑ | ↑ | ↑ | TiO$_2$ | None | - | 73.2 | 54.9 | 1.12 | 0.28 | 75 |
| * (not according to the invention) | | | | | | | | | | | | |

As shown in Table 1, in Catalysts 1 to 8 according to present test examples, the promoter was added, and thus the initial amount of acid became small. Accordingly, it was confirmed that even in a small amount of water vapor, a decrease in the CO conversion ratio after a durability test for 100 hours was small, and thus the CO shift reaction was maintained in a satisfactory manner.

In any catalyst, a deterioration ratio in the CO conversion ratio was satisfactory as 90% to 96%, and a great decrease was not found.

Particularly, in catalysts of Test Catalysts 2, and 4 to 6, the initial amount of acid was small, and a decrease in the CO conversion ratio after the durability test of 100 hours was very small.

In contrast, in Comparative Catalyst according to Comparative Example, the CO conversion ratio greatly decreased (deterioration ratio was 75%).

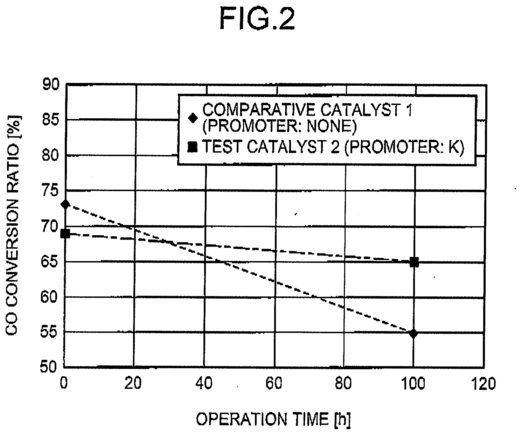

FIG. 2 is a graph comparing an initial CO conversion ratio (%) and a CO conversion ratio (%) after passage of 100 hours in a durability test with Test Catalyst 2.

As is clear from FIG. 2, in Test Catalyst 2, K was added as the promoter, and thus the initial amount of acid was as small as 0.11 mmol/g. In addition, the CO conversion ratio was smaller (69.3%) than that of Comparative Catalyst 1 (73.2%), and precipitation of carbon was small in a durability test, and thus the CO conversion ratio (%) after passage of 100 hours was 64.8% in comparison to a result (54.9%) of Comparative Catalyst 1, and the deterioration ratio was small (94%).

Accordingly, in the CO shift catalyst according to this test, since the promoter component such as Ca, K, and P was added as the third component, the initial amount of acid could be made to be small, and thus the precipitated amount of carbon (C) was small. Accordingly, it was proved that the CO shift catalyst according to this test is excellent in durability, and thus the CO shift reaction can be stably maintained for a long period of time.

<Coal Gasification Power Generation Plant>

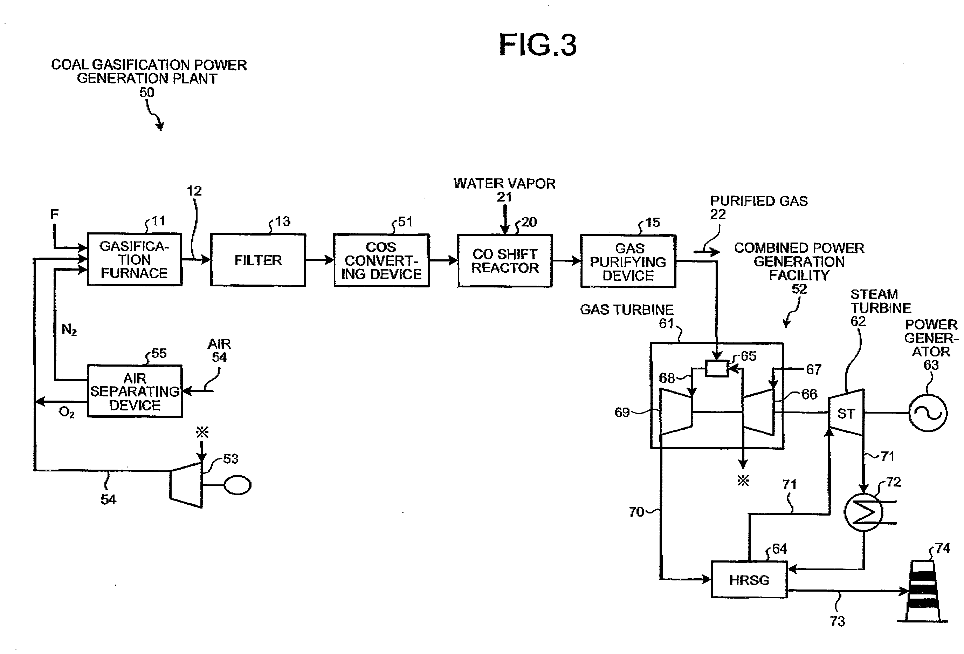

A coal gasification power generation plant provided with the CO shift reactor 20 according to this example will be described with reference to the attached drawing. FIG. 3 is a diagram illustrating an example of the coal gasification power generation plant. As illustrated in FIG. 3, a coal gasification power generation plant 50 includes a gasification furnace 11, a filter 13, a COS converting device 51, a CO shift reactor 20, a gas purifying device ($H_2S/CO_2$ recovery unit) 15, and a combined power generation facility 52.

Coal that is a fuel F, and air 54 from a gasification air compressor 53 are supplied to the gasification furnace 11, and the coal is gasified in the gasification furnace 11, thereby obtaining the gasification gas 12 that is a generated gas. In addition, in the gasification furnace 11, the air 54 is separated into nitrogen ($N_2$) and oxygen ($O_2$) with an air separating device 55 and $N_2$ and $O_2$ are appropriately supplied to the gasification furnace 11. In the coal gasification power generation plant 50, the gasification gas 12 obtained in the gasification furnace 11 is supplied to the filter 13 to remove dust, and then the gasification gas is supplied to the COS converting device 51 to convert COS contained in the gasification gas 12 into $H_2S$.

Then, the gasification gas 12 containing $H_2S$ is supplied to the CO shift reactor 20, and water vapor 21 is supplied to the CO shift reactor 20 to allow a CO shift reaction, which converts CO in the gasification gas 12 into $CO_2$, to occur in the CO shift reactor 20.

In the CO shift reactor 20, the CO shift catalyst according to the invention is used. Accordingly, even when an amount of water vapor is greatly reduced as described above, it is possible to efficiently generate a reformed gas for a long period of time.

The resultant reformed gas, which is obtained after converting CO in the gasification gas 12 into $CO_2$ in the CO shift reactor 20, is supplied to a $H_2S/CO_2$ recovery unit that is the gas purifying device 15 to remove $CO_2$ and $H_2S$ in the reformed gas with the $H_2S/CO_2$ recovery unit.

A purified gas 22, which is purified with the gas purifying device 15, is supplied to the combined power generation facility 52. The combined power generation facility 52 includes a gas turbine 61, a steam turbine 62, a power generator 63, and a heat recovery steam generator (HRSG) 64. The combined power generation facility 52 supplies the purified gas 22 to a combustor 65 of the gas turbine 61 that is a power generating means. In addition, the gas turbine 61 supplies air 67, which is supplied to a compressor 66, to the combustor 65. The gas turbine 61 combusts the purified gas 22 with the combustor 65 to generate a high-pressure and high-temperature combustion gas 68, and a turbine 69 is driven with the combustion gas 68. The turbine 69 is connected to the power generator 63, and thus when the turbine 69 is driven, the power generator 63 generates power. A flue gas 70 after driving the turbine 69 has a temperature of 500°C to 600°C. Accordingly, the flue gas 70 is transmitted to the heat recovery steam generator (HRSG) 64 to recover thermal energy. In the heat recovery steam generator (HRSG) 64, steam 71 is generated by the thermal energy of the flue gas 70, and the steam turbine 62 is driven with the steam 71. After being used in the steam turbine 62, the steam 71 is discharged from the steam turbine 62, and is cooled with a heat exchanger 72. Then, the steam 71 is supplied to the heat recovery steam generator 64. In addition, with regard to the flue gas 73 from which thermal energy is recovered with the heat recovery steam generator 64, NOx and the like in the flue gas 73 are removed with a denitrification device (not illustrated) and the like, and then the flue gas 73 is discharged to the air through a chimney 74.

As described above, according to the coal gasification power generation plant 50 provided with the CO shift reactor 20 according to this example, even in a case where an amount of water vapor is reduced in the CO shift reactor 20 (water vapor ($H_2O$)/CO = approximately 1), since in the CO shift catalyst, the promoter is added, the initial amount of acid is reduced, and thus a decrease in the CO conversion ratio is reduced. Accordingly, with regard to the gasification gas 12 that is gasified with the gasification furnace 11, CO contained in the gasification gas 12 is converted into $CO_2$, and thus it is possible to stably perform the CO shift reaction with respect to a reformed gas for a long period of time.

According to this, with regard to the CO shift reaction, it is possible to continuously perform the CO shift reaction with less water vapor in a stable manner, and thus it is possible to reduce an amount of water vapor that is extracted from HRSG 64. Accordingly, it is possible perform an operation in which energy efficiency of the coal gasification power generation plant 50 is improved.

In addition, an installation position of the CO shift reactor 20 is not limited to a position between the COS converting device 51 and the gas purifying device ($H_2S/CO_2$ recovery unit) 15 (on a front end side of the $H_2S/CO_2$ recovery unit), and the CO shift reactor 20 may be installed downstream of the gas purifying device ($H_2S/CO_2$ recovery unit) 15.

In addition, in this example, description has been given to a case where the purified gas 22 discharged from the gas purifying device ($H_2S/CO_2$ recovery unit) 15 is used as a gas for a turbine. However, a large amount of CO contained in the gasification gas 12 is converted into $CO_2$ in the CO shift reactor 20, and thus the purified gas 22 may be used, for example, as a raw material gas, which composes chemicals such as methanol and ammonia, in addition to the gas for a turbine.

Hereinbefore, description has been given to a case where in the CO shift reactor 20 according to this example, CO contained in the gasification gas 12, which is generated by gasification of the fuel F such as coal with the gasification furnace 11, is converted into $CO_2$. However, the invention may be similarly applied to a CO shift reactor which converts a CO-containing gas into $CO_2$ with a fuel cell, and the like.

Reference Signs List

| | |
|---|---|
| 10 | GASIFICATION GAS PURIFYING SYSTEM |
| 11 | GASIFICATION FURNACE |
| 12 | GASIFICATION GAS |
| 13 | FILTER |
| 14 | WET SCRUBBER DEVICE |
| 15A | ABSORBER |
| 15B | REGENERATOR |
| 15 | GAS PURIFYING DEVICE |
| 19 | CO SHIFT CATALYST |
| 20 | CO SHIFT REACTOR |
| 21 | WATER VAPOR |
| 22 | PURIFIED GAS |

**Claims**

1. A CO shift catalyst that reforms carbon monoxide (CO) in a gasification gas, comprising:

   an active component including either molybdenum (Mo) or iron (Fe), and either nickel (Ni) or ruthenium (Ru);
   a promoter component including phosphorus (P) to suppress precipitation of carbon in a case where a supply amount of water vapor relative to carbon oxide decreases from ($H_2O$)/CO = 3 to ($H_2O$)/CO = 1; and
   a carrier which carries the active component and the promoter component, and includes one or more kinds of oxides of titanium (Ti), zirconium (Zr), and cerium (Ce).

2. The CO shift catalyst according to claim 1,

   wherein in the active component, an amount of the main component that is carried is 0.1 wt% to 25 wt%, and an amount of the accessory component that is carried is 0.01 wt% to 10 wt%, and

an amount of the promoter component that is carried is 0.1 wt% to 2.0 wt%.

**Patentansprüche**

1. Ein CO-Shift-Katalysator, der Kohlenmonoxid (CO) in einem Vergasungsgas umwandelt, umfassend:

   eine aktive Komponente, die entweder Molybdän (Mo) oder Eisen (Fe) und entweder Nickel (Ni) oder Ruthenium (Ru) enthält;
   eine Promotorkomponente einschließlich Phosphor (P) um die Ausfällung von Kohlenstoff in einem Fall zu unterdrücken, in dem eine zugeführte Menge an Wasserdampf im Verhältnis zu Kohlenmonooxid von $(H_2O)/CO = 3$ auf $(H_2O)/CO = 1$ abnimmt; und
   einen Träger, der die aktive Komponente und die Promotorkomponente trägt und eine oder mehrere Arten von Oxiden von Titan (Ti), Zirkonium (Zr) und Cer (Ce) enthält.

2. Der CO-Shift-Katalysator nach Anspruch 1,

   wobei in der aktiven Komponente die Menge der getragenen Hauptkomponente 0,1 Gew.-% bis 25 Gew.-% beträgt und die Menge der getragenen Zusatzkomponente 0,01 Gew.-% bis 10 Gew.-% beträgt, und
   eine Menge der getragenen Promotorkomponente 0,1 Gew.-% bis 2,0 Gew.-% beträgt.

**Revendications**

1. Catalyseur de conversion de CO qui réforme le monoxyde de carbone (CO) en un gaz de gazéification, comprenant :

   un composant actif comportant soit du molybdène (Mo), soit du fer (Fe), et soit du nickel (Ni) soit du ruthénium (Ru) ;
   un composant promoteur comportant du phosphore (P) pour supprimer la précipitation du carbone dans un cas où une quantité fournie de vapeur d'eau par rapport au dioxyde de carbone diminue de $(H_2O)/CO = 3$ à $(H_2O)/CO = 1$ ; et
   un support qui supporte le composant actif et le composant promoteur, et comporte un ou plusieurs types d'oxydes de titane (Ti), zirconium (Zr), et cérium (Ce).

2. Catalyseur de conversion de CO selon la revendication 1,

   dans lequel dans le composant actif, une quantité du composant principal supporté est de 0,1 % en poids à 25 % en poids, et une quantité du composant accessoire supporté est de 0,01 % en poids à 10 % en poids, et une quantité du composant promoteur supporté est de 0,1% en poids à 2,0 % en poids.

# FIG.1

# FIG.2

# FIG.3

COAL GASIFICATION POWER
GENERATION PLANT
50

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004331701 A
- JP 2011157486 A
- WO 2012168690 A1